(19) Europäisches Patentamt European Patent Office Office européen des brevets

(11) **EP 4 269 634 A1**

(12) **EUROPEAN PATENT APPLICATION**
published in accordance with Art. 153(4) EPC

(43) Date of publication:
**01.11.2023 Bulletin 2023/44**

(21) Application number: **21909747.4**

(22) Date of filing: **09.04.2021**

(51) International Patent Classification (IPC):
*C22B 1/00* (2006.01)     *C22B 7/02* (2006.01)
*C22B 13/00* (2006.01)     *C22B 3/12* (2006.01)
*C22B 3/44* (2006.01)

(52) Cooperative Patent Classification (CPC):
**C22B 1/00; C22B 3/12; C22B 3/44; C22B 7/02;
C22B 13/00;** Y02P 10/20

(86) International application number:
**PCT/JP2021/014981**

(87) International publication number:
**WO 2022/137585 (30.06.2022 Gazette 2022/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.12.2020 JP 2020213603**

(71) Applicant: **Mitsubishi Materials Corporation
Tokyo 100-8117 (JP)**

(72) Inventors:
• **MURAOKA, Shu**
  **Kagawa-gun, Kagawa 761-3110 (JP)**
• **TANAKA, Fumito**
  **Tokyo 100-8117 (JP)**
• **MORIMOTO, Tomoya**
  **Kagawa-gun, Kagawa 761-3110 (JP)**

(74) Representative: **Gille Hrabal
Partnerschaftsgesellschaft mbB
Patentanwälte
Brucknerstraße 20
40593 Düsseldorf (DE)**

(54) **METHOD FOR RECOVERING LEAD FROM COPPER SMELTING DUST**

(57)     There is provided a method for recovering lead from copper smelting dust according to the present invention includes an alkali leaching step of leaching lead contained in copper smelting dust with an alkali solution, a step of performing a solid liquid separation on a post-leaching solution and a leaching residue after the alkali leaching step, a neutralization step of adding an acid to the separated post-leaching solution to precipitate a lead, and a step of recovering a precipitate containing the lead by performing a solid liqiud separation.

FIG. 1

COPPER SMELTING DUST (Pb, Cu, Sn, S, Ag, Au)

WATER → WATER WASHING

SOLID LIQUID SEPARATION → POST-WASHING LIQUID (Cu, S)

WASHED DUST (Pb, Sn, Cu, Ag, Au)

NaOH SOLUTION → ALKALI LEACHING (pH OF 13.0 OR MORE)

Pb LEACHING

SOLID LIQUID SEPARATION → LEACHING RESIDUE (Sn, Cu, Ag, Au)

POST-LEACHING SOLUTION (Pb)

SULFURIC ACID → NEUTRALIZATION (ALKALI RANGE OF pH OF 12.5 OR LESS)

Pb PRECIPITATION

SOLID LIQUID SEPARATION → POST-NEUTRALIZATION LIQUID

RECOVERED LEAD MATERIAL (Pb)

EP 4 269 634 A1

**Description**

TECHNICAL FIELD

The present invention relates to a method for recovering lead from dust (flue cinder) that is generated in a copper smelting step, which is a method for efficiently recovering lead contained in the dust by separating it from precious metals such as copper, tin, and zinc, as well as gold and silver.

Priority is claimed on Japanese Patent Application No. 2020-213603, filed December 23, 2020, the content of which is incorporated herein by reference.

BACKGROUND ART

In a copper smelting step, a raw material such as copper concentrate is melted and separated into copper matte and slag by using the difference in the specific gravity of the solution, and then the slag is discharged, and the air is blown into the copper matte to produce blister copper. The blister copper is oxidized and then reduced in a refining furnace and subjected to anode casting, whereby electrolytic copper is produced by electrorefining or the like. In such copper refining, in a case where the amount of lead contained in the raw material increases, the lead concentration in the copper anode increases, which adversely affects the copper electrorefining step. To avoid this adverse effect, it is required to remove lead in the copper smelting step.

Since lead is easily volatile, it is concentrated in the dust (flue cinder) in the copper smelting step. Since the dust contains volatile metals (tin, zinc, and the like) other than lead and further contains copper and precious metals, the dust generated in the smelting step is captured and returned to the copper smelting furnace in order to recover this copper content and precious metal content. If lead is separated from the dust, the lead separated is excluded from the feed to the copper smelting furnace.

As a treatment method for treating copper smelting dust in the related art, there is known a method separating copper and lead utilizing the fact that copper smelting dust is concentrated to become the leaching residue (lead sludge) containing lead as a main component in a case of being immersed in sulfuric acid to leach out the copper. For example, Patent Document 1 describes a treatment method in which copper smelting dust is immersed in dilute sulfuric acid to leach out copper, zinc, and arsenic, while forming a residue mainly containing lead and bismuth.

In addition, it is also known that an oxidizing agent is added to carry out the sulfuric acid leaching. For example, Japanese Unexamined Patent Application, First Publication No. 2009-242850 describes a method for separating lead and copper by slurrying lead sludge, adding sulfuric acid and ferric sulfate together with air, and oxidizing copper to carry out sulfuric acid leaching. Further, Patent Document 2 describes a method for separating lead and copper in a leaching residue by adding copper smelting dust to an acidic solution of sulfuric acid having a pH of 1.0 or higher and leaching copper in the dust, while adding a trivalent iron compound to carry out oxidation, thereby increasing the leaching rate.

However, in the sulfuric acid leaching of the copper smelting dust, a small amount of copper is mixed in the lead sludge of the leaching residue, and most of the tin, gold, silver, and the like in the dust is contained in the lead sludge, and thus there is a problem that it is difficult to obtain a recovered lead material having a high lead quality. In addition, in addition to copper, various impurities in lead refining remain in lead sludge without being leached out, and thus there is also a problem that the lead sludge is not always preferable as a raw material for lead refining.

[Citation List]

[Patent Documents]

[Patent Document 1]
Japanese Unexamined Patent Application, First Publication No. S59-162233
[Patent Document 2]
Japanese Unexamined Patent Application, First Publication No. 2009-242850
[Patent Document 3]
Japanese Unexamined Patent Application, First Publication No. 2013-237920

## SUMMARY OF INVENTION

### Technical Problem

The method according to the present invention solves the above-described problems in the related art in the sulfuric acid leaching of the copper smelting dust known, and it provides a method for efficiently recovering lead contained in the copper smelting dust by separating it from precious metals such as copper, tin, and zinc, as well as gold and silver.

### Solution to Problem

In order to solve the above problems, the present invention employs the following means.

[1] A method for recovering lead from copper smelting dust according to one aspect of the present invention includes an alkali leaching step of leaching lead contained in copper smelting dust with an alkali solution, a step of performing a solid liquid separation on a post-leaching solution and a leaching residue after the alkali leaching step, a neutralization step of adding an acid to the separated post-leaching solution to precipitate a lead, and a step of recovering a precipitate containing the lead by performing a solid liquid separation.
[2] In the alkali leaching step of the method for recovering lead from copper smelting dust according to [1] above, it is preferable that the lead is leached out under a liquid condition of a pH of 13.0 or more, and the lead is precipitated under a liquid condition in an alkali range of a pH of 12.5 or less in the neutralization step.
[3] In the method for recovering lead from copper smelting dust according to [1] or [2] above, it is preferable that the copper smelting dust is washed with water or an acid, and the washed copper smelting dust is subjected to the alkali leaching.

### Advantageous Effects of Invention

A recovered lead material obtained by the method according to the present invention has a high concentration of lead as compared with lead sludge obtained by sulfuric acid leaching. Specifically, for example, the lead concentration of a recovered lead material of Example 1 according to the present invention is 62.0%, whereas the lead concentration of a lead sludge obtained by sulfuric acid leaching of Comparative Example 1 is 9.4%, and thus the lead quality of the lead recovered material according to the method according to the present invention is remarkably high.
In a method including the washing step according to the present invention, a large amount of the copper content contained in the dust is removed in the washing step, and thus the burden of alkali leaching is reduced, and a recovered lead material having a low copper concentration but having a high lead concentration is obtained as compared with a case where the washing step is not included. Specifically, for example, in Example 2 which does not include the washing step, the lead concentration of the recovered lead material is 38.5% (lead distribution ratio: 34.7%), and the copper concentration is 25.5% (copper distribution ratio: 9.0%), whereas in Example 1 which includes the washing step, the lead concentration of the recovered lead material is 62.0% (lead distribution ratio: 49.5%), and the copper concentration is 4.7% (copper distribution ratio: 1.5%). That is, the lead concentration is increased significantly, while the copper concentration is decreased significantly.
Further, according to the method for recovering lead according to the present invention, a recovered lead material containing almost no tin, gold, and silver can be obtained, and thus loss of valuable materials such as gold and silver is remarkably small.

## BRIEF DESCRIPTION OF DRAWINGS

FIG. 1 is a processing flow showing an example of the method for recovering lead according to the present invention.
FIG. 2 is a graph showing changes in lead concentration with respect to the pH of an alkali solution.

## DESCRIPTION OF EMBODIMENTS

Hereinafter, a method for recovering lead from copper smelting dust according to an embodiment to which the present invention is applied will be described in detail with reference to the drawings. It is noted that in the drawings to be used in the following description, for convenience, a characteristic portion may be enlarged in some cases in order to make the features easily understood, and a dimensional ratio or the like of each component is not always the same as an actual one. In addition, the materials, dimensions, and the like in the following description are exemplary examples, which do not limit the present invention, and thus the present invention can be implemented with appropriate modifications within the scope in which the gist of the present invention does not change.

[Specific description]

Hereinafter, the method for recovering lead from copper smelting dust according to the present embodiment will be specifically described. It is noted that the unit % for representing the concentration means % by mass.

The treatment method according to the present embodiment is a method of separating and recovering lead from dust generated in the copper smelting step (referred to as copper smelting dust). The copper smelting dust contains lead, copper, zinc, tin, and small amounts of precious metals. The treatment method according to the present embodiment is a method for efficiently separating and recovering lead contained in the copper smelting dust from copper, tin, zinc, gold, silver, and the like.

The method for recovering lead according to the present embodiment is specifically a method for recovering lead from copper smelting dust, including an alkali leaching step of leaching lead contained in copper smelting dust with an alkali solution; a step of performing a solid liquid separation on a post-leaching solution and a leaching residue after the alkali leaching step; a neutralization step of adding an acid to the separated post-leaching solution to precipitate a lead; and a step of recovering a precipitate containing the lead by performing a solid liquid separation.

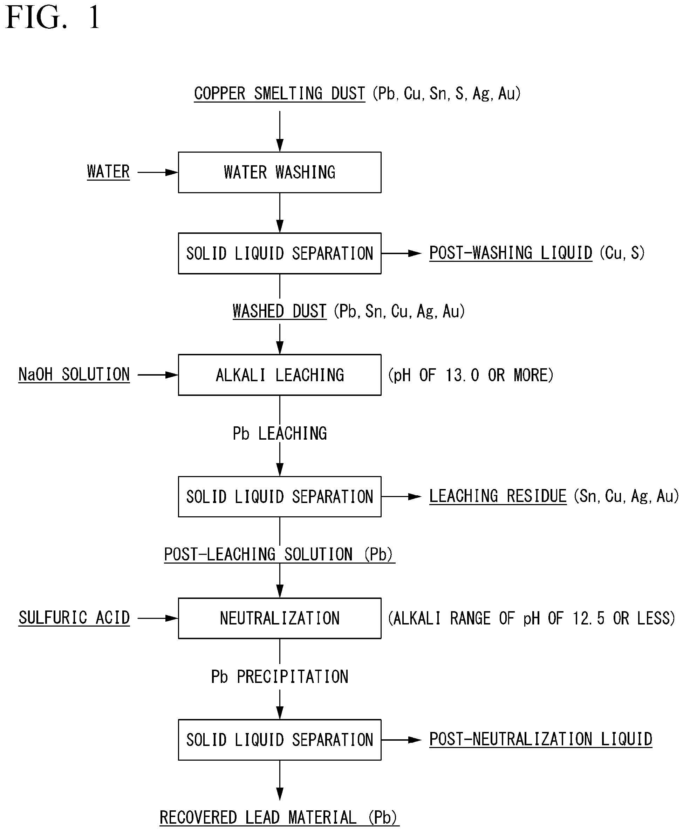

In addition, in the method for recovering lead according to the present embodiment, a washing step of washing the copper smelting dust with water or an acid may be provided prior to the alkali leaching step, and it is more preferable to subject the copper smelting dust (referred to as the washed dust) obtained by the washing to alkali leaching. An example of the processing flow of the method for recovering lead according to the present embodiment is shown in FIG. 1.

[Washing step]

The copper smelting dust is washed with water or an acid. This washing washes away soluble copper compounds contained in the copper smelting dust. For example, a large amount of the copper contained in copper smelting dust is copper sulfate, and this copper sulfate is eluted into the water to remove the copper content. It is noted that since the slurry of the copper smelting dust becomes weakly acidic due to the elution of copper sulfate or the like, an acid may be used instead of water for washing.

Most of the copper content contained in the dust is removed from the system by the washing step prior to alkali leaching, and most of the zinc contained in the copper smelting dust is washed out and removed, and thus a chemical cost for alkali leaching can be reduced. It is noted that lead, tin, and the like other than copper, contained in the copper smelting dust, are oxides or sulfates, and these are hardly washed out and remain in the washed dust.

After washing, the slurry is subjected to solid-liquid separation to recover the washed dust, and the post-washing liquid is sent out of the system. Since the post-washing liquid contains a large amount of the copper content of the copper smelting dust, it can be used as a raw material for copper recovery. The recovered washed dust is sent to the alkali leaching step.

[Alkali leaching step]

The washed dust is added to an alkali solution to form a slurry, and the lead contained in the washed dust is subjected to alkali leaching. As the alkali solution, a general alkali solution such as a sodium hydroxide solution or a potassium hydroxide solution can be used.

The lead contained in the washed dust is mainly lead sulfate ($PbSO_4$) and lead oxide (PbO). Lead sulfate reacts with, for example, sodium hydroxide as shown in Expression [1] to generate a plumbite ion, thereby being eluted. Lead oxide is also eluted in the same manner; however, since lead oxide is more stable than lead sulfate, the lead present in excess over the solubility thereof precipitates as lead oxide.

$$PbSO_4 + 2NaOH \rightarrow HPbO_2^- + Na_2SO_4 + H^+ \ldots \qquad [1]$$

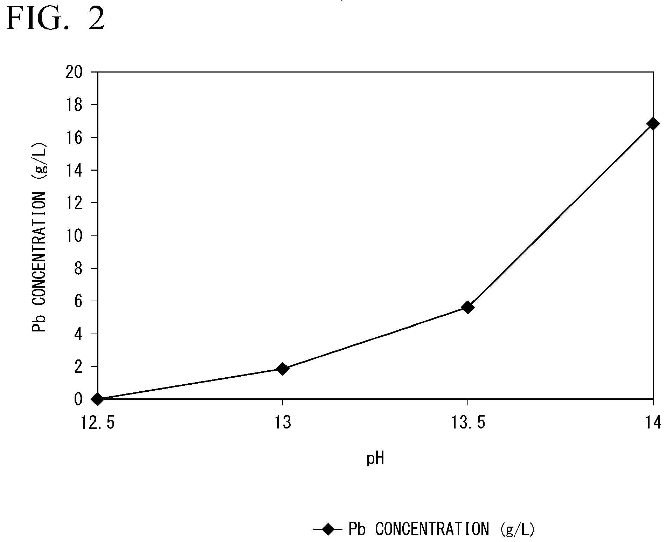

The solubility of lead in an alkali solution varies depending on pH. FIG. 2 shows the change in lead concentration in the liquid with respect to pH. As shown in the graph of FIG. 2, the lead concentration is 2 g/L at the pH is 13.0, and the lead concentration in the liquid increases in proportion to the increase in pH. For example, the lead concentration at pH 13.5 is close to 6 g/L, which is about three times the lead concentration at pH 13.0. As a result, for subjecting lead to alkali leaching, the pH of the alkali solution is preferably 13.0 or more and more preferably 13.5 or more.

On the other hand, most of the tin contained in the washed dust is tin oxide ($SnO_2$), and a small amount of copper sulfide (CuS) or the like remains in the washed dust; however, these tin oxide and copper sulfide hardly dissolve in an alkali solution. In addition, since precious metals such as gold and silver contained in the washed dust are not dissolved either, lead is selectively leached out in this alkali leaching.

[Solid-liquid separation]

After the alkali leaching, the post-leaching solution and the leaching residue are subjected to solid-liquid separation. Since the recovered post-leaching solution contains lead, it is sent to the neutralization step of recovering lead. On the other hand, since the leaching residue contains tin oxide, which is difficult to be subjected to alkali leaching, a small amount of copper content, and a trace amount of precious metals, this leaching residue can be reused by repeatedly being added as a raw material to, for example, the copper smelting step.

[Neutralization step]

As shown in FIG. 2, the lead concentration in the liquid decreases as the pH decreases, and the lead concentration is substantially zero in a case where the pH is 12.5. Although the lead ($Pb^{2+}$) subjected to the alkali leaching is dissolved, for example, in a state of $HPbO^{2-}$ in a pH range of 13 or more, as shown in Expression [1], the precipitation of lead oxide (PbO) occurs in a pH range of 12.5 or less. Therefore, in order to recover the lead contained in the post-leaching solution, an acid is added to the post-leaching solution to neutralize it so that the pH is in an alkali range of 12.5 or less. Here, in a case where the copper smelting dust as a raw material contains arsenic, the arsenic may migrate to the alkali leaching liquid. In this case, in a case where the pH is decreased too much, arsenic oxide ($As_2O_3$) precipitates, which is not preferable since the quality of the recovered lead material may deteriorate. Therefore, the pH of the liquid after the neutralization is preferably in the alkali range. Specifically, the pH is preferably 10.0 or more and 12.5 or less and more preferably 11.5 or more and 12.5 or less. The acid to be used for neutralization may be a general acid such as sulfuric acid, hydrochloric acid, or nitric acid.

[Recovery step]

After the neutralization treatment, solid-liquid separation is carried out to recover a precipitate containing lead. In this recovered lead-containing material (referred to as the recovered lead material), lead is selectively leached out in the alkali leaching of the washed dust, and thus the amount of impurities other than lead, contained in the post-leaching solution is small, whereby a recovered lead material having a high lead quality can be obtained.

EXAMPLES

Hereinafter, the effect of the present invention will be revealed clearer with reference to Examples. It is noted that the present invention is not limited by Examples below and thus can be implemented with appropriate modifications within the scope in which the gist of the present invention does not change.

Examples according to the present invention are shown below together with Comparative Examples. Metal concentrations in the liquid and the sludge (the precipitate) were measured according to ICP-AES. Table 1 shows the concentrations of metals and the like contained in the copper smelting dust used. The distribution ratio of these metals and the like were determined according to Expression [2].

$$\text{Distribution ratio } (\%) = [\text{amount of metals distributed into a certain material}]/[\text{amount of metals in dust}] \times 100 \cdots [2]$$

[Table 1]

| Metals and the like contained in copper smelting dust | | | | | | |
|---|---|---|---|---|---|---|
| | Cu | Pb | Sn | S | Ag | Au |
| Copper smelting dust | 16.8% | 6.6% | 7.5% | 26.7% | 68.6 ppm | 7.4 ppm |
| (Note) % means % by mass. | | | | | | |

[Example 1]

300 g of copper smelting dust was dissolved in 1 L of water, followed by stirring for 30 minutes to form a water slurry. This was subjected to solid-liquid separation by a suction filtration device to obtain a post-washing residue (washed dust) and a post-washing liquid. This washed dust was dissolved in 1 L of an NaOH solution of 3 N (3 mol/L) to form an alkali slurry, the pH was adjusted to 14 or more, and alkali leaching was carried out for 30 minutes. After the leaching, the alkali slurry was subjected to solid-liquid separation by the suction filtration device to obtain a post-leaching solution and a leaching residue. Sulfuric acid was added to the separated post-leaching solution for neutralization, and the pH was adjusted to 12.5 to precipitate lead oxide. Thereafter, the lead oxide precipitate and the post-neutralization liquid were subjected to solid-liquid separation by the suction filtration device, and the recovered lead oxide precipitate was dried at 105°C for 12 hours to obtain a recovered lead material.

Table 2 shows the distribution ratios of metals and the like contained in the post-washing liquid after the water washing, the leaching residue after the alkali leaching, and the post-neutralization liquid after the neutralization treatment. In addition, Table 3 shows the concentrations and distribution ratios of metals and the like in the recovered lead material.

As shown in Table 3, the lead concentration of the recovered lead material was 60% or more, where it was a recovered lead material having a high lead quality, containing almost no tin, gold, silver, and the like. In addition, as shown in Table 2, the entire amount of gold and silver migrated to the leaching residue of the alkali leaching and was substantially not contained in the recovered lead material, and thus it was possible to minimally suppress the loss of gold, silver, and the like due to the recovered lead material. Further, as shown in Table 2, 80% or more of the copper contained in the dust was washed away by washing with water, whereby it was possible to obtain a recovered lead material having a low copper concentration.

[Table 2]

| Distribution ratio at treatment stage | | | | | | |
|---|---|---|---|---|---|---|
| | Cu (%) | Pb (%) | Sn (%) | S (%) | Ag (%) | Au (%) |
| Post-washing liquid | 83.6 | < 0.1 | 1.6 | 91.8 | < 0.1 | < 0.1 |
| Leaching residue | 16.0 | 50 | 98.4 | 4.9 | 100 | 100 |
| Post-neutralization liquid | < 0.1 | 0.5 | < 0.1 | 3.1 | < 0.1 | < 0.1 |

[Table 3]

| Component concentration and distribution ratio of recovered lead material | | | | | | |
|---|---|---|---|---|---|---|
| | Cu | Pb | Sn | S | Ag | Au |
| [Recovered lead material]<br>Concentration<br>Distribution ratio | <br>4.7<br>1.5 | <br>62.0<br>49.5 | <br>< 0.1<br>< 0.1 | <br>< 0.1<br>0.2 | <br>< 0.1<br>< 0.1 | <br>< 0.1<br>< 0.1 |
| (Note) The concentrations of Cu, Pb, Sn, and S are in terms of % by mass, the concentrations of Ag and Au are in terms of ppm, and the distribution ratio is in terms of %. | | | | | | |

[Example 2]

300 g of the same copper smelting dust as in Example 1 was dissolved in 1 L of an NaOH solution of 3 N to form an alkali slurry, the pH was adjusted to 14, and alkali leaching was carried out for 30 minutes. After the leaching, the alkali slurry was subjected to solid-liquid separation by the suction filtration device to obtain a post-leaching solution and a leaching residue. Sulfuric acid was added to the separated post-leaching solution for neutralization, and the pH was adjusted to 12.5 to precipitate lead oxide. Thereafter, the lead oxide precipitate and the post-neutralization liquid were subjected to solid-liquid separation by the suction filtration device, and the recovered lead oxide precipitate was dried at 105°C for 12 hours to obtain a recovered lead material.

Table 4 shows the distribution ratios of metals and the like contained in the leaching residue of the alkali leaching and the post-solution after the neutralization treatment. Table 5 shows the concentrations and distribution ratios of metals and the like in the recovered lead material. As shown in Table 5, a recovered lead material having a lead concentration of 38.5%, having a low tin concentration, and having almost no gold and silver was obtained. The lead quality of this example is low as compared with Example 1, and this is conceived to be because copper is eluted together with lead by alkali leaching to form a tetrahydroxycuprate ion $[Cu(OH)_4^{2-}]$, whereby hydroxyl groups are consumed, the pH is decreased, and the leaching rate of lead is decreased.

In addition, the copper concentration of the recovered lead material in this example is high as compared with Example 1, and this is conceived to be because water washing is not carried out in this example, and thus the copper remains without being washed out and removed, and this copper is leached out by alkali leaching and mixed with the lead precipitate. From the comparison between Example 1 and this example (Example 2), it was confirmed that water washing prior to alkali leaching is effective in removing copper content.

[Table 4]

| Distribution ratio at treatment stage | | | | | | |
|---|---|---|---|---|---|---|
| | Cu (%) | Pb (%) | Sn (%) | S (%) | Ag (%) | Au (%) |
| Leaching residue | 91.0 | 65.0 | 98.2 | 5.0 | 100 | 100 |
| Post-neutralization liquid | < 0.1 | 0.4 | < 0.1 | 94.9 | < 0.1 | < 0.1 |

[Table 5]

| Component concentration and distribution ratio of recovered lead material | | | | | | |
|---|---|---|---|---|---|---|
| | Cu | Pb | Sn | S | Ag | Au |
| [Recovered lead material]<br>Concentration<br>Distribution ratio | 25.5<br>9.0 | 38.5<br>34.6 | 2.3<br>1.8 | 0.4<br>0.1 | < 0.1<br>< 0.1 | < 0.1<br>< 0.1 |
| (Note) The concentrations of Cu, Pb, Sn, and S are in terms of % by mass, the concentrations of Ag and Au are in terms of ppm, and the distribution ratio is in terms of %. | | | | | | |

[Comparative Example 1: Sulfuric acid leaching]

300 g of the same copper smelting dust as in Example 1 was dissolved in 1 L of sulfuric acid having a concentration of 200 g/L to form a sulfuric acid slurry, which was subsequently subjected to sulfuric acid leaching for 30 minutes. After the leaching, the sulfuric acid slurry was subjected to solid-liquid separation by the suction filtration device to obtain a leaching residue (lead sludge) and a post-leaching solution. This leaching residue was dried at 105°C for 12 hours to obtain a recovered lead material. Table 6 shows the concentrations and distribution ratios of metals and the like in this recovered lead material. In addition, Table 6 shows the distribution ratios of metals and the like to the post-leaching solution.

As shown in Table 6, the lead concentration of the recovered lead material is 9.4%, which is significantly low as compared with Examples 1 and 2. In addition, the recovered lead material of this comparative example has a low copper concentration. However, regarding the ratio (Cu/Pb) of the copper concentration to the lead concentration, the copper/lead ratio (Cu/Pb) of Example 1 is about 0.076, whereas the copper/lead ratio (Cu/Pb) of this comparative example is about 0.276, which is significantly high as compared with Example 1. In addition, the tin concentration in this comparative example is about 10%, which is not preferable as a lead raw material. Further, in this comparative example, although the entire amount of the lead contained in the dust migrated to the recovered lead material, 11% of the copper and almost all of the gold and silver also migrated to the recovered lead material, which shows that a significant loss of valuable materials has occurred.

[Table 6]

| Distribution ratio of post-leaching solution, and component concentration and distribution ratio of recovered lead material | | | | | | |
|---|---|---|---|---|---|---|
| | Cu | Pb | Sn | S | Ag | Au |
| [Post-leaching solution]<br>Distribution ratio | 89.0 | < 0.1 | 0.5 | 19.0 | 1.0 | < 0.1 |
| [Recovered lead material] | | | | | | |

(continued)

| Distribution ratio of post-leaching solution, and component concentration and distribution ratio of recovered lead material | | | | | | |
|---|---|---|---|---|---|---|
| | Cu | Pb | Sn | S | Ag | Au |
| Concentration | 2.6 | 9.4 | 10.7 | 30.9 | 97.1 | 10.1 |
| Distribution ratio | 11.0 | 100.0 | 99.5 | 81.0 | 99 | 100 |
| (Note) The concentrations of Cu, Pb, Sn, and S are in terms of % by mass, the concentrations of Ag and Au are in terms of ppm, and the distribution ratio is in terms of %. | | | | | | |

**Claims**

1. A method for recovering lead from copper smelting dust, comprising:

an alkali leaching step of leaching lead contained in copper smelting dust with an alkali solution;
a step of performing a solid liquid separation on a post-leaching solution and a leaching residue after the alkali leaching step;
a neutralization step of adding an acid to the separated post-leaching solution to precipitate a lead; and
a step of recovering a precipitate containing the lead by performing a solid liquid separation.

2. The method for recovering lead from copper smelting dust according to Claim 1,
wherein the lead is leached out under a liquid condition of a pH of 13.0 or more in the alkali leaching step, and the lead is precipitated under a liquid condition in an alkali range of a pH of 12.5 or less in the neutralization step.

3. The method for recovering lead from copper smelting dust according to Claim 1 or 2,
wherein the copper smelting dust is washed with water or an acid, and the washed copper smelting dust is subjected to the alkali leaching.

# FIG. 1

COPPER SMELTING DUST (Pb, Cu, Sn, S, Ag, Au)

WATER ──→ | WATER WASHING |

| SOLID LIQUID SEPARATION | ──→ POST-WASHING LIQUID (Cu, S)

WASHED DUST (Pb, Sn, Cu, Ag, Au)

NaOH SOLUTION ──→ | ALKALI LEACHING | (pH OF 13.0 OR MORE)

Pb LEACHING

| SOLID LIQUID SEPARATION | ──→ LEACHING RESIDUE (Sn, Cu, Ag, Au)

POST-LEACHING SOLUTION (Pb)

SULFURIC ACID ──→ | NEUTRALIZATION | (ALKALI RANGE OF pH OF 12.5 OR LESS)

Pb PRECIPITATION

| SOLID LIQUID SEPARATION | ──→ POST-NEUTRALIZATION LIQUID

RECOVERED LEAD MATERIAL (Pb)

FIG. 2

<table>
<tr><td colspan="2" align="center">**INTERNATIONAL SEARCH REPORT**</td><td colspan="2">International application No.</td></tr>
<tr><td colspan="2"></td><td colspan="2">PCT/JP2021/014981</td></tr>
</table>

**A. CLASSIFICATION OF SUBJECT MATTER**
Int. Cl. C22B1/00(2006.01)i, C22B7/02(2006.01)i, C22B13/00(2006.01)i,
C22B3/12(2006.01)i, C22B3/44(2006.01)i
FI: C22B13/00 101, C22B7/02 B, C22B3/12, C22B3/44 101A, C22B1/00 101
According to International Patent Classification (IPC) or to both national classification and IPC

**B. FIELDS SEARCHED**

Minimum documentation searched (classification system followed by classification symbols)
Int. Cl. C22B1/00, C22B7/02, C22B13/00, C22B3/12, C22B3/44

Documentation searched other than minimum documentation to the extent that such documents are included in the fields searched
Published examined utility model applications of Japan      1922-1996
Published unexamined utility model applications of Japan    1971-2021
Registered utility model specifications of Japan            1996-2021
Published registered utility model applications of Japan    1994-2021

Electronic data base consulted during the international search (name of data base and, where practicable, search terms used)
JSTPlus/JST7580/JSTChina (JDreamIII)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2003-181413 A (DOWA MINING CO., LTD.) 02 July 2003 (2003-07-02), claims, paragraphs [0001], [0011]-[0013], [0018]-[0024], fig. 1-3 | 1-2<br>3 |
| Y<br>A | JP 51-61425 A (OOTE KINZOKU KK) 28 May 1976 (1976-05-28), claims, p. 1, left column, lines 13-20 | 1-2<br>3 |

☐ Further documents are listed in the continuation of Box C.    ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19.05.2021 | 01.06.2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

Information on patent family members

| International application No. |
| --- |
| PCT/JP2021/014981 |

| Patent Documents referred to in the Report | Publication Date | Patent Family | Publication Date |
| --- | --- | --- | --- |
| JP 2003-181413 A | 02.07.2003 | (Family: none) | |
| JP 51-61425 A | 28.05.1976 | (Family: none) | |

Form PCT/ISA/210 (patent family annex) (January 2015)

**EP 4 269 634 A1**

**REFERENCES CITED IN THE DESCRIPTION**

**Patent documents cited in the description**

- JP 2020213603 A
- JP 2009242850 A
- JP S59162233 A
- JP 2013237920 A